# FASCICULE DE BREVET EUROPEEN

(11) **EP 4 305 963 B1**
(45) Date de publication et mention de la délivrance du brevet: **28.01.2026**
(21) Numéro de dépôt: 23184635.3
(22) Date de dépôt: 11.07.2023
(51) Int. Cl.: A21C 15/00, A21B 3/13, A21C 15/02, A21C 15/04, A23P 20/20, A23P 30/10, A47J 43/20

(54) **DISPOSITIF POUR LE MOULAGE D'UNE PRÉPARATION CULINAIRE ÉTAGÉE ET PROCÉDÉ DE MISE EN OEUVRE D'UN TEL DISPOSITIF**
VORRICHTUNG ZUM FORMEN EINER GESTUFTEN LEBENSMITTELZUBEREITUNG UND VERFAHREN ZUM BETRIEB EINER SOLCHEN VORRICHTUNG
DEVICE FOR MOULDING A STEPPED CULINARY PREPARATION AND METHOD FOR IMPLEMENTING SUCH A DEVICE

(30) Priorité: 11.07.2022 FR 2207077
(43) Date de publication de la demande: 17.01.2024
(73) Titulaire: El Hazmi, Elaïssati, 59370 Mons en Baroeul (FR)
(72) Inventeur: ELAÏSSATI, Fatiha, 59370 Mons en Baroeul (FR)
(74) Mandataire: RVDB

(56) Documents cités:
- CA-A1- 2 994 317
- CN-U- 212 184 898
- US-A1- 2014 178 550
- ANONYMOUS: "QIQN Baking Rings Cake Ring 8 Pieces 304 Stainless Steel Cake Ring Crumpets Dessert Rings Mousse Rings with Silicone Brush for Pancakes Eggs Muffins Silver (8 x 2.5 cm) : Amazon.de: Home & Kitchen", 19 August 2021 (2021-08-19), XP093018015, Retrieved from the Internet <URL:https://www.amazon.de/-/en/Stainless-Crumpets-Dessert-Silicone-Pancakes/dp/B09D37TRMC/ref=sr_1_59?crid=1YQ2PTZHY07T9&keywords=tortenringe&qid=1674732703&sr=8-59> [retrieved on 20230126]
- ANONYMOUS: "Stainless Steel Adjustable 6-8 inch Layered Cake Cutter Slicer, 7-Layer Cake Bread Round Ring Slicer, Baking Tool Kit(Without Cake Knife) : Buy Online at Best Price in KSA - Souq is now Amazon.sa: Home", 25 March 2021 (2021-03-25), XP093018376, Retrieved from the Internet <URL:https://www.amazon.sa/-/en/Stainless-Adjustable-Layered-7-Layer-Without/dp/B08SKGZGY7/ref=d_pd_day0_sccl_2_6/261-5525697-4561637?pd_rd_w=awkMP&content-id=amzn1.sym.06885aec-8b22-4801-81bc-19e163f58593&pf_rd_p=06885aec-8b22-4801-81bc-19e163f58593&pf_rd_r=2M4H3Y95JS3QGB6RRAB3&pd_rd_wg=7yXY6&pd_rd_r=8d> [retrieved on 20230127]
- ANONYMOUS: "Cake Cutter for Cutting Cake Horizontally, 24 CM Radius, Expandable & Has A Stainless Steel Material : Buy Online at Best Price in KSA - Souq is now Amazon.sa: Home", 11 February 2020 (2020-02-11), XP093018380, Retrieved from the Internet <URL:https://www.amazon.sa/-/en/Cutting-Horizontally-Expandable-Stainless-Material/dp/B084PY3V1H> [retrieved on 20230127]

## Description

### Domaine de l'invention

La présente demande de brevet se rapporte au domaine du moulage et de la confection d'une préparation culinaire étagée, et plus particulièrement au domaine de la confection de pâtisseries étagés.

La présente invention trouvera de façon non-exclusive des applications avantageuses dans le domaine de la pâtisserie.

### Etat de la technique

La confection de pâtisseries étagées consiste généralement à superposer alternativement des couches alimentaires de différentes natures, par exemple en alternant des couches solides du type génoise, avec des couches de garniture du type crème et/ou mousse, pour obtenir une pâtisserie de forme cylindrique.

Dans ce but, il est connu d'utiliser un moule de forme cylindrique, aussi appelé emporte-pièce, dans lequel on confectionne une à une les couches solides de la pâtisserie.

Une fois les couches solides confectionnées, on érige la pâtisserie étagée en superposant alternativement une couche solide et une couche de garniture, jusqu'à obtenir la pâtisserie souhaitée.

La confection d'une pâtisserie étagée telle que décrite précédemment est délicate et aboutie généralement à une pâtisserie dont les couches sont assemblées de façon irrégulière.

De plus, une superposition imprécise des couches de la pâtisserie peut occasionner des problèmes d'équilibre de la pâtisserie, voire une chute de la pâtisserie.

### Exposé de l'invention

La présente invention a notamment pour but de résoudre les inconvénients de l'art antérieur précité en proposant un dispositif pour le moulage d'une préparation culinaire étagée qui permet à la fois de mouler préalablement les couches solides de la pâtisserie et de guider les différentes couches lors du montage de la pâtisserie pour obtenir une pâtisserie régulière.

On atteint cet objectif, ainsi que d'autres qui apparaîtront à la lecture de la description qui suit, avec un dispositif pour le moulage d'une préparation culinaire étagée, comportant
- une embase présentant une forme de coupelle qui comporte un fond adapté pour supporter la préparation culinaire et une paroi périphérique qui s'étend axialement autour de l'axe central du dispositif, depuis le fond de l'embase, jusqu'à un bord supérieur d'extrémité libre,
- un moule de premier niveau comprenant un fût qui est délimité par une face intérieure destinée à mouler la préparation culinaire et qui s'étend axialement autour de l'axe central depuis un tronçon inférieur, jusqu'à un tronçon supérieur, ledit tronçon inférieur étant conçu pour être emmanché de façon amovible à l'intérieur de la paroi périphérique de ladite embase, et l'extrémité libre du tronçon supérieur dudit fût étant équipée d'un organe d'emboîtement femelle supérieur qui s'étend autour de l'axe central,
- un moule de second niveau comprenant un fût qui est délimité par une face intérieure destinée à mouler la préparation culinaire, et qui s'étend axialement autour de l'axe central depuis un tronçon inférieur jusqu'à un tronçon supérieur, et l'extrémité libre du tronçon inférieur étant équipée d'un organe d'emboîtement mâle inférieur qui est adapté pour coopérer avec ledit organe d'emboîtement femelle du moule de premier niveau, le moule de second niveau étant conçu pour être empilé sur le moule de premier niveau dans une position emboîtée de moulage dans laquelle l'organe d'emboîtement mâle du moule de second niveau est reçu dans l'organe d'emboîtement femelle complémentaire du moule de premier niveau, de sorte que le fût du moule de premier niveau s'étend coaxialement au fût du moule de second niveau, caractérisé en ce que l'organe d'emboîtement femelle présente la forme d'une cornière comportant un siège qui s'étend radialement depuis une extrémité libre du tronçon supérieur du fût associé, vers l'extérieur du moule associé, et un rebord qui s'étend axialement depuis une extrémité périphérique dudit siège associé, et en ce que l'organe d'emboîtement mâle du moule de second niveau présente la forme d'une collerette qui s'étend radialement autour de l'axe (A) central depuis une extrémité libre du tronçon inférieur du fût associé, jusqu'à un bord périphérique, ladite collerette étant adaptée pour être en appui axial sur ledit siège de la cornière pour assurer une étanchéité entre le moule de premier niveau et le moule de second niveau empilés, et le bord périphérique de ladite collerette étant adapté pour coopérer avec ledit rebord de la cornière pour centrer axialement le moule de premier niveau et le moule de second niveau superposés suivant l'axe (A) central.

Ainsi, l'ensemble formé par l'embase et le moule de premier niveau est adapté pour confectionner une ou plusieurs couches dites solides et l'ensemble formé par l'embase, le moule de premier niveau et le moule de second niveau permet d'ériger la pâtisserie étagée en superposant alternativement une couche solide et une couche de garniture, jusqu'à obtenir la pâtisserie souhaitée.

Suivant d'autres caractéristiques optionnelles de l'invention, prises seules ou en combinaison :
- le fût du moule de second niveau présente le même diamètre que le fût du moule de premier niveau ;
- l'organe d'emboîtement femelle fait saillie radialement par rapport au fût du moule de premier niveau associé pour former une poignée de préhension ;
- l'embase, le moule de premier niveau et le moule de second niveau sont des solides de révolution engendrés autour de l'axe central du dispositif ;
- le dispositif comporte une pluralité d'embases interchangeables qui sont chacune d'une hauteur différente. Cette caractéristique permet de réaliser des premières couches dites solides d'épaisseurs différentes ;
- le moule de second niveau est équipé d'un organe d'emboîtement femelle supérieur qui est adapté pour coopérer avec un organe d'emboîtement mâle inférieur complémentaire d'un autre moule de second niveau, dans le but de pouvoir empiler axialement une pluralité de moules de second niveau.

L'invention concerne aussi un procédé pour le moulage d'une préparation culinaire étagée, qui est mis en œuvre au moyen d'un dispositif pour le moulage d'une préparation culinaire étagée qui comporte au moins :
- une embase présentant une forme de coupelle qui comporte un fond adapté pour supporter la préparation culinaire et une paroi périphérique qui s'étend axialement autour de l'axe central du dispositif, depuis le fond de l'embase, jusqu'à un bord supérieur d'extrémité libre,
- un moule de premier niveau comprenant un fût qui est délimité par une face intérieure destinée à mouler la préparation culinaire et qui s'étend axialement autour de l'axe central depuis un tronçon inférieur, jusqu'à un tronçon supérieur, ledit tronçon inférieur étant conçu pour être emmanché de façon amovible à l'intérieur de la paroi périphérique de ladite embase, et l'extrémité libre du tronçon supérieur dudit fût étant équipée d'un organe d'emboîtement femelle supérieur qui s'étend autour de l'axe central,
- un moule de second niveau comprenant un fût qui est délimité par une face intérieure destinée à mouler la préparation culinaire, qui présente le même diamètre que le fût du moule de premier niveau, et qui s'étend axialement autour de l'axe central depuis un tronçon inférieur jusqu'à un tronçon supérieur, et l'extrémité libre du tronçon inférieur étant équipée d'un organe d'emboîtement mâle inférieur qui est adapté pour coopérer avec ledit organe d'emboîtement femelle du moule de premier niveau, le moule de second niveau étant conçu pour être empilé sur le moule de premier niveau dans une position emboîtée de moulage dans laquelle l'organe d'emboîtement mâle du moule de second niveau est reçu dans l'organe d'emboîtement femelle complémentaire du moule de premier niveau, de sorte que le fût du moule de premier niveau s'étend coaxialement au fût du moule de second niveau, caractérisé en ce que l'organe d'emboîtement femelle présente la forme d'une cornière comportant un siège qui s'étend radialement depuis une extrémité libre du tronçon supérieur du fût associé, vers l'extérieur du moule associé, et un rebord qui s'étend axialement depuis une extrémité périphérique dudit siège associé, et en ce que l'organe d'emboîtement mâle du moule de second niveau présente la forme d'une collerette qui s'étend radialement autour de l'axe (A) central depuis une extrémité libre du tronçon inférieur du fût associé, jusqu'à un bord périphérique, ladite collerette étant adaptée pour être en appui axial sur ledit siège de la cornière pour assurer une étanchéité entre le moule de premier niveau et le moule de second niveau empilés, et le bord périphérique de ladite collerette étant adapté pour coopérer avec ledit rebord de la cornière pour centrer axialement le moule de premier niveau et le moule de second niveau superposés suivant l'axe (A) central,

le procédé étant caractérisé en ce qu'il comprend au moins :
- une étape de montage du moule de premier niveau sur l'embase dans une position dans laquelle le moule de premier niveau est emboîté de façon amovible avec l'embase,
- une étape de moulage qui consiste à mouler une première couche alimentaire dans l'ensemble formé par le moule de premier niveau et l'embase précédemment emboîtés,
- une étape de démontage du moule de premier niveau et de l'embase, à la suite de laquelle la première couche alimentaire repose sur l'embase, et
- une étape de découpage de la première couche alimentaire au moyen d'un outil tranchant qui prend appui sur le bord supérieur d'extrémité libre de la paroi périphérique de l'embase.

Suivant d'autres caractéristiques optionnelles du procédé selon l'invention, prises seules ou en combinaison :
- le procédé comporte une étape de fabrication de la préparation culinaire étagée qui est réalisée à la suite de ladite étape de découpage, et qui comprend au moins une première phase consistant successivement à :
   - monter le moule de premier niveau sur l'embase,
   - déposer une première couche dans l'ensemble formé par le moule de premier niveau et de l'embase, et
   - recouvrir la première couche déposée précédemment par une seconde couche ;
- l'étape de fabrication de la préparation culinaire comprend au moins une seconde phase consistant successivement à :
   - monter le moule de second niveau sur le moule de premier niveau,
   - déposer une autre première couche dans le moule de second niveau,
   - recouvrir ladite première couche déposée précédemment par une seconde couche.

### Brève description des dessins

D'autres caractéristiques, buts et avantages de l'invention apparaîtront à la lecture de la description détaillée qui suit pour la compréhension de laquelle on se reportera aux dessins annexés dans lesquels :
[Fig. 1] est une vue en perspective de l'embase, du moule de premier niveau et des deux moules de second niveau du dispositif selon l'invention, en position emboîtée de moulage ;
[Fig. 2] est une vue éclatée en perspective du dispositif de la figure 1 ;
[Fig. 3] est une vue en section axiale du dispositif de la figure 1 à l'intérieur duquel une préparation culinaire est montée ;
[Fig. 4] est une vue de détail en section axiale d'une partie du dispositif de la figure 1 ;
[Fig. 5] est une vue en section axiale de l'embase et du moule de premier niveau au cours d'une étape de moulage du procédé selon l'invention ;
[Fig. 6] est une vue en section axiale du moule de premier niveau au cours d'une étape de découpage du procédé selon l'invention ;
[Fig. 7] est une vue en section axiale de l'embase selon une variante de réalisation du dispositif selon l'invention.

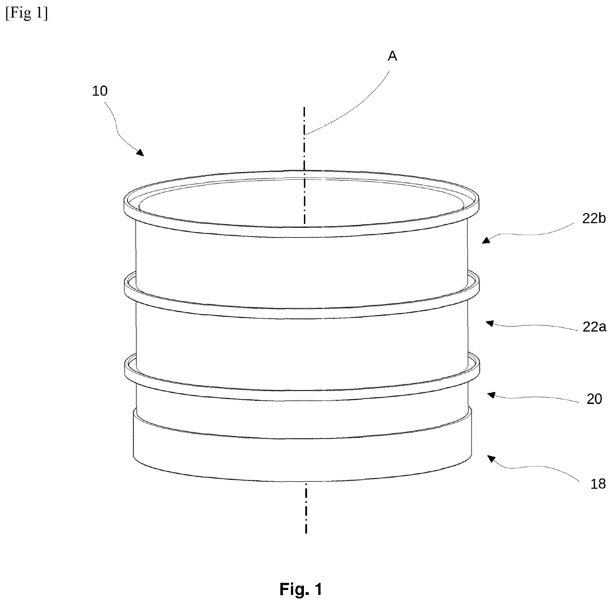

Dans la description et les revendications, on adoptera à titre non limitatif la terminologie « supérieur », « inférieur » et leurs dérivés en référence à la partie supérieure et à la partie inférieure respectivement de la figure 1, et la terminologie « radiale » et « axiale » en référence à l'axe A central représenté sur les figures.

Aussi, on utilisera à titre non limitatif les expressions « intérieur » et « extérieur », pour distinguer l'espace interne et l'espace externe respectivement du dispositif selon l'invention.

Sur l'ensemble de ces figures, les éléments identiques ou similaires sont repérés par des signes de référence identiques ou similaires et peuvent être différenciés par l'utilisation des lettres « a » et « b ».

### Description détaillée de modes de réalisation de l'invention

On a représenté à la figure 1 un dispositif 10 pour le moulage et la confection d'une préparation culinaire 12 étagée.

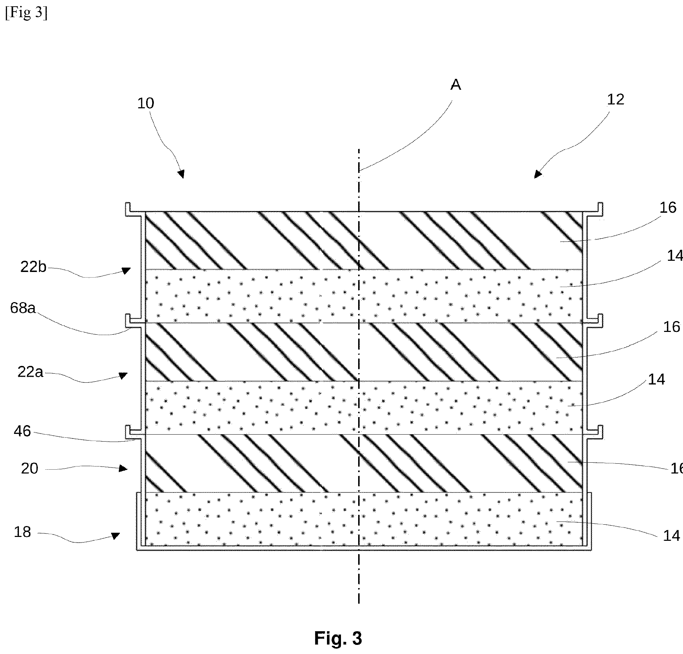

A titre d'exemple préféré, la préparation culinaire 12, illustrée à la figure 3, est une pâtisserie étagée, c'est à dire une pâtisserie qui alterne des couches alimentaires de différentes natures, par exemple en alternant des premières couches 14 dites « solides », du type génoise ou pâte à gâteau, avec des secondes couches 16 de garniture du type crème et/ou mousse.

Le dispositif 10 comporte successivement, du bas vers le haut, une embase 18, un moule de premier niveau 20 qui est emboîté dans l'embase 18, un premier moule de second niveau 22a et un second moule de second niveau 22b.

L'embase 18, le moule de premier niveau 20 et chaque moule de second niveau 22a, 22b, sont des solides de révolution qui sont engendrés autour d'un axe A central du dispositif 10 et qui présentent une épaisseur constante, comme on peut le voir à la figure 3.

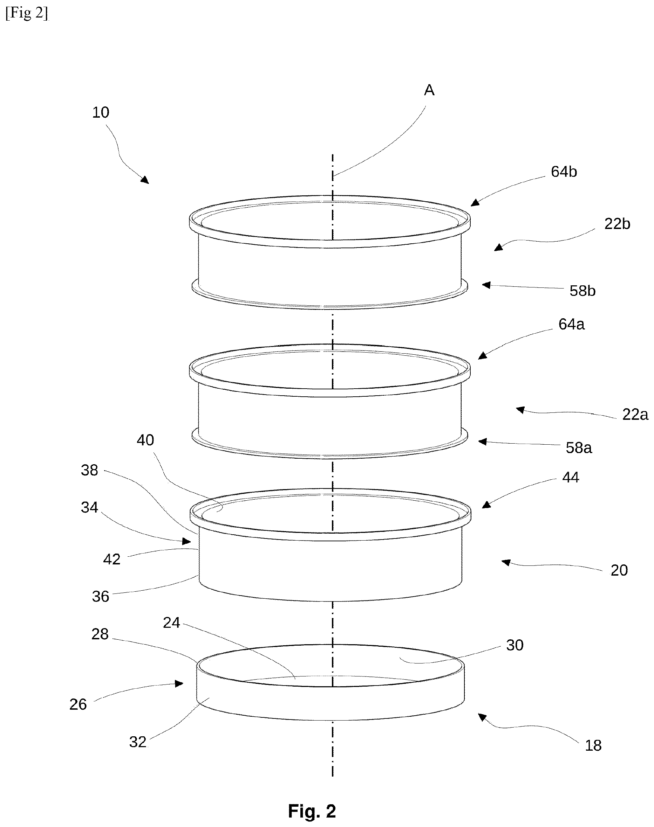

En référence à la figure 2, l'embase 18 présente une forme de coupelle qui comporte un fond 24 en forme de disque radial adapté pour supporter la préparation culinaire 12.

Aussi, l'embase 18 comporte une paroi périphérique 26 formant un rebord cylindrique qui s'étend axialement autour de l'axe A central du dispositif 10, depuis le fond 24 de l'embase 18, jusqu'à un bord supérieur 28 d'extrémité libre.

La paroi périphérique 26 de l'embase 18 est délimitée radialement par une face intérieure 30 qui est tournée vers l'axe A central et, à l'opposée, par une face extérieure 32.

Le moule de premier niveau 20 comprend un fût 34 cylindrique qui s'étend axialement autour de l'axe A central, depuis un tronçon inférieur 36, jusqu'à un tronçon supérieur 38.

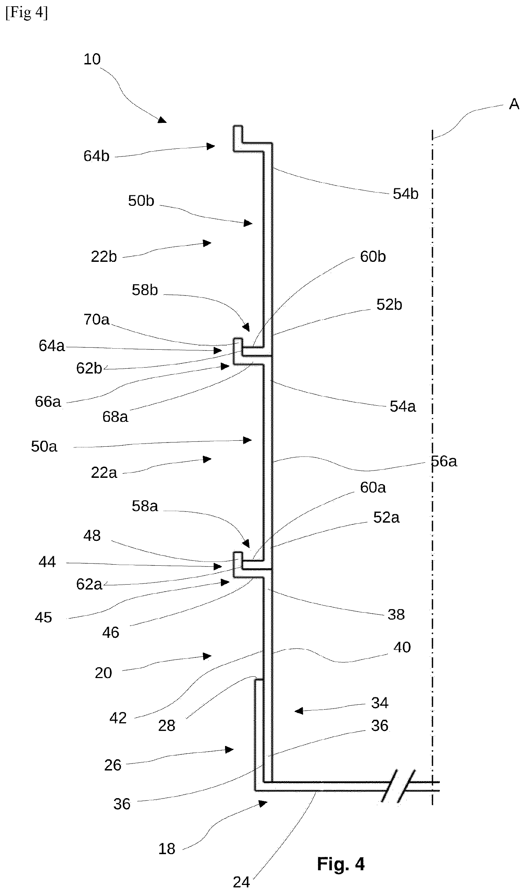

En référence à la figure 4, le moule de premier niveau 20 est monté de façon amovible sur l'embase 18, dans une position de moulage dans laquelle le tronçon inférieur 36 du fût 34 du moule de premier niveau 20 est emmanché de façon amovible contre la paroi périphérique 26 de l'embase 18, de sorte que le fût 34 du moule de premier niveau 20 est retenu par friction sur l'embase 18.

Aussi, le fût 34 du moule de premier niveau 20 est délimité radialement par une face intérieure 40 destinée à mouler tout ou partie de la préparation culinaire 12, et par une face extérieure 42 opposée.

L'extrémité libre du tronçon supérieur 38 du fût 34 du moule de premier niveau 20 est équipé d'un organe d'emboîtement femelle 44 supérieur qui s'étend autour de l'axe A central.

Comme on peut le voir à la figure 4, l'organe d'emboîtement femelle 44 présente la forme d'une cornière 45 annulaire comportant un siège 46 qui s'étend radialement depuis l'extrémité libre du tronçon supérieur 38 du fût 34 associé, vers l'extérieur du moule de premier niveau 20, et un rebord 48 qui s'étend axialement depuis une extrémité périphérique du siège 46 associé.

Avantageusement, l'organe d'emboîtement femelle 44 fait saillie radialement par rapport au fût 34 pour former une poignée de préhension.

Le premier moule de second niveau 22a comporte un fût 50a cylindrique qui s'étend axialement autour de l'axe A central, depuis un tronçon inférieur 52a, jusqu'à un tronçon supérieur 54a, et qui est délimité par une face intérieure 56a destinée à mouler la préparation culinaire 12.

L'extrémité libre du tronçon inférieur 52a est équipée d'un organe d'emboîtement mâle 58a inférieur qui présente la forme d'une collerette 60a qui s'étend radialement autour de l'axe A central, depuis une extrémité libre du tronçon inférieur 52a du fût 50a associé, jusqu'à un bord périphérique 62a.

Le moule de second niveau 22a est conçu pour être empilé sur le moule de premier niveau 20 dans une position emboîtée de moulage illustrée aux figures 1, 3 et 4, dans laquelle l'organe d'emboîtement mâle 58a du premier moule de second niveau 22a est reçu dans l'organe d'emboîtement femelle 44 complémentaire du moule de premier niveau 20, de sorte que le fût 34 du moule de premier niveau 20 s'étend coaxialement au fût 50a du premier moule de second niveau 22a.

Dans cette position emboîtée de moulage, la collerette 60a est en appui axial sur le siège 46 pour assurer une étanchéité entre le moule de premier niveau 20 et le premier moule de second niveau 22a.

De même, le bord périphérique 62a de la collerette 60a coopère avec le rebord 48 de la cornière 45 pour centrer axialement le moule de premier niveau 20 et le premier moule de second niveau 22a suivant l'axe A central.

En référence à la figure 4, on notera que lorsque le moule de second niveau 22a est empilé sur le moule de premier niveau 20, la face intérieure 56a du premier moule de second niveau 22a s'étend dans le prolongement de la face intérieure 40 du moule de premier niveau sans jour axial, de façon affleurante, pour doter la préparation culinaire 12 d'une forme parfaitement cylindrique.

Aussi, l'extrémité libre du tronçon supérieur 54a du fût 50a du premier moule de second niveau 22a est équipée d'un organe d'emboîtement femelle 64a supérieur qui s'étend autour de l'axe A central, et qui est identique à l'organe d'emboîtement femelle 44 du moule de premier niveau 20 décrit précédemment.

L'organe d'emboîtement femelle 64a du premier moule de second niveau 22a présente la forme d'une cornière 66a annulaire comportant un siège 68a qui s'étend radialement depuis l'extrémité libre du tronçon supérieur 54a du fût 50a du premier moule de second niveau 22a, vers l'extérieur, et un rebord 70a qui s'étend axialement depuis une extrémité périphérique du siège 68a associé.

De façon complémentaire, le second moule de second niveau 22b est équipé d'un organe d'emboîtement mâle 58b inférieur qui est adapté pour être emboîté avec l'organe d'emboîtement femelle 64a supérieur du premier moule de second niveau 22a.

Le second moule de second niveau 22b est identique au premier moule de second niveau 22a précédemment décrit et ne sera donc pas décrit en détail par la suite.

On notera cependant que le second moule de second niveau 22b est équipé également d'un organe d'emboîtement femelle 64b supérieur qui est adapté pour être emboîté avec un organe d'emboîtement mâle d'un troisième moule de second niveau supplémentaire (non représenté).

Le second moule de second niveau 22b comporte un fût 50b cylindrique qui s'étend axialement autour de l'axe A central, depuis un tronçon inférieur 52b, jusqu'à un tronçon supérieur 54b.

L'extrémité libre du tronçon inférieur 52b est équipée de l'organe d'emboîtement mâle 58b inférieur qui présente la forme d'une collerette 60b qui s'étend radialement autour de l'axe A central, depuis une extrémité libre du tronçon inférieur 52b du fût 50b associé, jusqu'à un bord périphérique 62b.

Ainsi, le dispositif 10 selon l'invention permet de choisir la hauteur finale de l'ensemble formé par les différents moules en empilant une pluralité de moules de second niveau.

On notera également que les deux moules de second niveau 22a, 22b et le moule de premier niveau 20 présentent le même diamètre intérieur, de façon à doter la préparation culinaire 12 d'une forme finie cylindrique et régulière.

La présente invention concerne également un procédé pour le moulage de la préparation culinaire 12 étagée, qui est mis en œuvre au moyen du dispositif 10 précédemment décrit.

Selon un exemple de mise en œuvre, le procédé selon l'invention comprend une première étape de montage du moule de premier niveau 20 sur l'embase 18 dans une position de moulage dans laquelle le tronçon inférieur 36 du fût 34 du moule de premier niveau 20 est emmanché de façon amovible contre la paroi périphérique 26 de l'embase 18, de sorte que le fût 34 du moule de premier niveau 20 est retenu par friction sur l'embase 18.

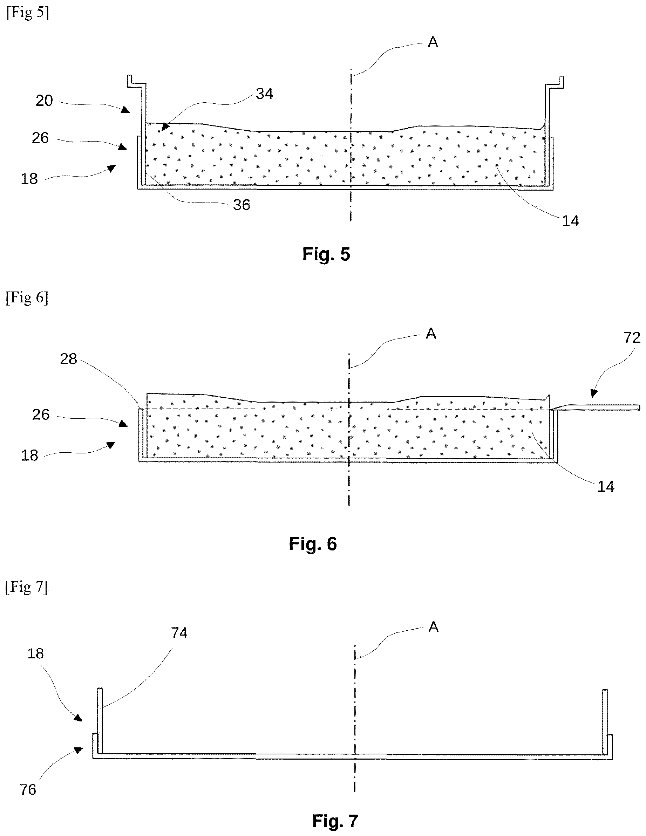

En référence à la figure 5, la première étape de montage est suivie par une étape de moulage qui consiste à mouler une première couche 14 alimentaire du type génoise, dans l'ensemble formé par le moule de premier niveau 20 et l'embase 18 précédemment assemblés.

L'étape de moulage est par exemple réalisée en déversant une pâte dans l'ensemble formé par le moule de premier niveau 20 et l'embase 18 puis en faisant cuire cette pâte pour obtenir la première couche 14 de génoise.

A la suite de l'étape de moulage, le procédé comporte une étape de démontage du moule de premier niveau 20 et de l'embase 18, à la suite de laquelle la première couche 14 de génoise est démoulée et repose sur l'embase 18, comme illustré à la figure 6.

Ensuite, la première couche 14 de génoise est découpée au moyen d'un outil 72 tranchant qui prend appui sur le bord supérieur 28 d'extrémité libre de la paroi périphérique 26 de l'embase 18, au cours d'une étape de découpage.

L'étape de découpage permet d'obtenir une première couche 14 de génoise parfaitement calibrée et parfaitement coupée.

A titre d'exemple, l'étape de moulage, l'étape de démontage et l'étape de découpage sont répétées trois fois afin d'obtenir trois premières couches 14 de génoise.

De plus, le procédé selon l'invention comporte une étape de fabrication de la préparation culinaire 12 étagée qui consiste à déposer alternativement dans le dispositif 10 de moulage, les premières couches 14 de génoise et les secondes couches 16 alimentaires du type crème, pour obtenir une préparation culinaire 12 telle qu'illustrée à la figure 3.

Dans ce but, on dépose une première couche 14 de génoise dans l'ensemble formé par le moule de premier niveau 20 et de l'embase 18, puis on recouvre la première couche 14 par une seconde couche 16.

Avantageusement, la seconde couche 16 est déposée jusqu'au siège 46 du moule de premier niveau 20, le siège 46 servant de guide visuel qui permet de lisser la surface de la seconde couche 16 de façon plane, à hauteur du siège 46.

Ensuite, on emboîte le premier moule de second niveau 22a sur le moule de premier niveau 20, puis on dépose une autre première couche 14 sur la seconde couche 16 préalablement déposée, puis on dépose une autre seconde couche 16 jusqu'au siège 68a du premier moule de second niveau 22a.

Enfin, on emboîte le second moule de second niveau 22b sur le premier moule de second niveau 22a, puis on dépose une autre première couche 14 sur la seconde couche 16 préalablement déposée, puis on dépose une autre seconde couche 16 jusqu'au siège 68b du second moule de second niveau 22b.

Une fois toutes les couches 14, 16 déposées, le dispositif 10 est démonté pour démouler la préparation culinaire 12.

Ainsi, le dispositif 10 selon l'invention permet à la fois de mouler préalablement les couches solides de la préparation culinaire 12 et de guider les différentes couches lors du montage de la préparation culinaire 12 pour obtenir un résultat d'aspect homogène.

De préférence, le dispositif 10 selon l'invention comporte une pluralité d'embases 18 interchangeables qui sont chacune d'une hauteur différente, pour permettre la réalisation de premières couches 41 de différentes épaisseurs au cours de l'étape de moulage.

Aussi, selon une variante de réalisation représentée à la figure 7, l'embase 18 est réalisée en deux parties pour favoriser le démoulage des préparations préparées au moyen de l'embase 18.

Selon cette variante, l'embase 18 comporte un fond 76 amovible et une couronne 74 annulaire qui s'étend autour de l'axe A central et qui présente un diamètre intérieur égal au diamètre de l'embase 18 telle que décrite précédemment.

Le fond 76 présente une forme de coupelle qui est montée sur la couronne 74 par coopération de forme.

Naturellement, l'invention est décrite dans ce qui précède à titre d'exemple.

Par exemple, les éléments du dispositif 10 selon l'invention peuvent présenter une forme générale polygonale plutôt qu'une forme générale cylindrique.

## Revendications

1. Dispositif (10) pour le moulage d'une préparation culinaire (12) étagée, comportant au moins:
• une embase (18) présentant une forme de coupelle qui comporte un fond (24) adapté pour supporter la préparation culinaire (12) et une paroi périphérique (26) qui s'étend axialement autour de l'axe (A) central du dispositif (10), depuis le fond (24) de l'embase (18), jusqu'à un bord supérieur (28) d'extrémité libre,
• un moule de premier niveau (20) comprenant un fût (26) qui est délimité par une face intérieure (40) destinée à mouler la préparation culinaire (12) et qui s'étend axialement autour de l'axe (A) central depuis un tronçon inférieur (36), jusqu'à un tronçon supérieur (38), ledit tronçon inférieur (36) étant conçu pour être emmanché de façon amovible à l'intérieur de la paroi périphérique (26) de ladite embase (18), et l'extrémité libre du tronçon supérieur (38) dudit fût (26) étant équipée d'un organe d'emboîtement femelle (44) supérieur qui s'étend autour de l'axe (A) central,
• un moule de second niveau (22a) comprenant un fût (50a) qui est délimité par une face intérieure (56a) destinée à mouler la préparation culinaire (12), et qui s'étend axialement autour de l'axe (A) central depuis un tronçon inférieur (52a) jusqu'à un tronçon supérieur (54a), et l'extrémité libre du tronçon inférieur (52a) étant équipée d'un organe d'emboîtement mâle (58a) inférieur qui est adapté pour coopérer avec ledit organe d'emboîtement femelle (44) du moule de premier niveau (20), le moule de second niveau (22a) étant conçu pour être empilé sur le moule de premier niveau (20) dans une position emboîtée de moulage dans laquelle l'organe d'emboîtement mâle (58a) du moule de second niveau (22a) est reçu dans l'organe d'emboîtement femelle (44) complémentaire du moule de premier niveau (20), de sorte que le fût (26) du moule de premier niveau (20) s'étend coaxialement au fût (50a) du moule de second niveau (22a),
ledit dispositif (10) étant **caractérisé en ce que** l'organe d'emboîtement femelle (44) présente la forme d'une cornière (45) comportant un siège (46) qui s'étend radialement depuis une extrémité libre du tronçon supérieur (38) du fût (26) associé, vers l'extérieur du moule associé, et un rebord (48) qui s'étend axialement depuis une extrémité périphérique dudit siège (46) associé, et **en ce que** l'organe d'emboîtement mâle (58a) du moule de second niveau (22a) présente la forme d'une collerette (60a) qui s'étend radialement autour de l'axe (A) central depuis une extrémité libre du tronçon inférieur (52a) du fût associé, jusqu'à un bord périphérique (62a), ladite collerette (60a) étant adaptée pour être en appui axial sur ledit siège (46) de la cornière (45) pour assurer une étanchéité entre le moule de premier niveau (20) et le moule de second niveau (22a) empilés, et le bord périphérique (62a) de ladite collerette (60a) étant adapté pour coopérer avec ledit rebord (48) de la cornière (45) pour centrer axialement le moule de premier niveau (20) et le moule de second niveau (22a) superposés suivant l'axe (A) central.

2. Dispositif (10) selon la revendication 1, **caractérisé en ce que** le fût (50a) du moule de second niveau (22a) présente le même diamètre que le fût (26) du moule de premier niveau (20).

3. Dispositif (10) selon l'une quelconque des revendications précédentes, **caractérisé en ce que** l'organe d'emboîtement femelle (44) fait saillie radialement par rapport au fût (26) du moule de premier niveau (20) associé pour former une poignée de préhension.

4. Dispositif (10) selon l'une quelconque des revendications précédentes, **caractérisé en ce que** l'embase (18), le moule de premier niveau (20) et le moule de second niveau (22a) sont des solides de révolution engendrés autour de l'axe (A) central du dispositif (10).

5. Dispositif (10) selon l'une quelconque des revendications précédentes, **caractérisé en ce qu'**il comporte une pluralité d'embases (18) interchangeables qui sont chacune d'une hauteur différente.

6. Dispositif (10) selon l'une quelconque des revendications précédentes, **caractérisé en ce que** le moule de second niveau (22a) est équipé d'un organe d'emboîtement femelle (64a) supérieur qui est adapté pour coopérer avec un organe d'emboîtement mâle (58b) inférieur complémentaire d'un autre moule de second niveau (22b), dans le but de pouvoir empiler axialement une pluralité de moules de second niveau (22a, 22b).

7. Procédé pour le moulage d'une préparation culinaire (12) étagée, qui est mis en œuvre au moyen d'un dispositif pour le moulage d'une préparation culinaire (12) étagée selon l'une quelconque des revendication 1 à 6,
le procédé comprenant au moins :
• une étape de montage du moule de premier niveau (20) sur l'embase (18) dans une position dans laquelle le moule de premier niveau (20) est emboîté de façon amovible avec l'embase (18),
• une étape de moulage qui consiste à mouler une première couche (14) alimentaire dans l'ensemble formé par le moule de premier niveau (20) et l'embase (18) précédemment emboîtés,
• une étape de démontage du moule de premier niveau (20) et de l'embase (18), à la suite de laquelle la première couche alimentaire (14) repose sur l'embase (18), et
• une étape de découpage de la première couche alimentaire (14) au moyen d'un outil (72) tranchant qui prend appui sur le bord supérieur (28) d'extrémité libre de la paroi périphérique (26) de l'embase (18).

8. Procédé selon la revendication 7, **caractérisé en ce qu'**il comporte une étape de fabrication de la préparation culinaire (12) étagée qui est réalisée à la suite de ladite étape de découpage, et qui comprend au moins une première phase consistant successivement à :
• monter le moule de premier niveau (20) sur l'embase (18),
• déposer une première couche (14) dans l'ensemble formé par le moule de premier niveau (20) et de l'embase (18), et
• recouvrir la première couche (14) déposée précédemment par une seconde couche (16).

9. Procédé selon la revendication 8, **caractérisé en ce que** l'étape de fabrication de la préparation culinaire (12) comprend au moins une seconde phase consistant successivement à :
• monter le moule de second niveau (22a) sur le moule de premier niveau (20),
• déposer une autre première couche (14) dans le moule de second niveau (22a),
• recouvrir ladite première couche (14) déposée précédemment par une seconde couche (16).

## Patentansprüche

1. Vorrichtung (10) zum Formen einer gestuften Speisezubereitung (12), die mindestens Folgendes aufweist:
• eine Basis (18), die eine Schalenform besitzt, die einen Boden (24), der so ausgelegt ist, dass er die Speisezubereitung (12) trägt, und eine Umfangswand (26) aufweist, die sich von dem Boden (24) der Basis (18) bis zu einer freien oberen Endkante (28) axial um die zentrale Achse (A) der Vorrichtung (10) erstreckt,
• eine Form der ersten Ebene (20), die einen Zylinder (26) umfasst, der durch eine Innenseite (40) begrenzt ist, die zum Formen der Speisezubereitung (12) bestimmt ist und sich von einem unteren Abschnitt (36) bis zu einem oberen Abschnitt (38) axial um die zentrale Achse (A) erstreckt, wobei der untere Abschnitt (36) so ausgebildet ist, dass er beweglich in die Umfangswand (26) der Basis (18) eingepresst werden kann, und das freie Ende des oberen Abschnitts (38) des Zylinders (26) mit einem oberen Buchsen-Eingriffselement (44) ausgestattet ist, das sich um die zentrale Achse (A) erstreckt,
• eine Form der zweiten Ebene (22a), die einen Zylinder (50a) umfasst, der durch eine Innenseite (56a) begrenzt ist, die zum Formen der Speisezubereitung (12) bestimmt ist und sich von einem unteren Abschnitt (52a) bis zu einem oberen Abschnitt (54a) axial um die zentrale Achse (A) erstreckt, und wobei das freie Ende des unteren Abschnitts (52a) mit einem unteren Stecker-Eingriffselement (58a) ausgestattet ist, das so ausgelegt ist, dass es mit dem Buchsen-Eingriffselement (44) der Form der ersten Ebene (20) zusammenwirkt, wobei die Form der zweiten Ebene (22a) so ausgebildet ist, dass sie auf der Form der ersten Ebene (20) in einer Formsteckposition gestapelt werden kann, in der das Stecker-Eingriffselement (58a) der Form der zweiten Ebene (22a) in dem Buchsen-Eingriffselement (44), das zu der Form der ersten Ebene (20) komplementär ist, aufgenommen wird, so dass sich der Zylinder (26) der Form der ersten Ebene (20) koaxial zu dem Zylinder (50a) der Form der zweiten Ebene (22a) erstreckt, wobei die Vorrichtung (10) **dadurch gekennzeichnet ist, dass** das Buchsen-Eingriffselement (44) die Form eines Winkels (45), der einen Sitz (46) besitzt, der sich von einem freien Ende des oberen Abschnitts (38) des zugehörigen Zylinders (26) radial nach außen zu der zugehörigen Form erstreckt, und einen Rand (48) aufweist, der sich axial von einem peripheren Ende des zugehörigen Sitzes (46) erstreckt, und dass das Stecker-Eingriffselement (58a) der Form der zweiten Ebene (22a) die Form eines Bunds (60a) besitzt, der sich von einem freien Ende des unteren Abschnitts (52a) des zugehörigen Zylinders bis zu einem Umfangsrand (62a) radial um die zentrale Achse (A) erstreckt, wobei der Bund (60a) so ausgelegt ist, dass er axial auf dem Sitz (46) des Winkels (45) aufliegt, um eine Abdichtung zwischen der Form der ersten Ebene (20) und der Form der zweiten Ebene (22a), die gestapelt sind, zu gewährleisten, und der Umfangsrand (62a) des Bunds (60a) so ausgelegt ist, dass er mit dem Rand (48) des Winkels (45) zusammenwirkt, um die Form der ersten Ebene (20) und die Form der zweiten Ebene (22a), die sich entlang der zentralen Achse (A) überlagern, axial zu zentrieren.

2. Vorrichtung (10) nach Anspruch 1, **dadurch gekennzeichnet, dass** der Zylinder (50a) der Form der zweiten Ebene (22a) denselben Durchmesser aufweist wie der Zylinder (26) der Form der ersten Ebene (20).

3. Vorrichtung (10) nach einem der vorhergehenden Ansprüche, **dadurch gekennzeichnet, dass** das Buchsen-Eingriffselement (44) radial zu dem Zylinder (26) der zugehörigen Form der ersten Ebene (20) vorsteht, um einen Haltegriff zu bilden.

4. Vorrichtung (10) nach einem der vorhergehenden Ansprüche, **dadurch gekennzeichnet, dass** die Basis (18), die Form der ersten Ebene (20) und die Form der zweiten Ebene (22a) um die zentrale Achse (A) der Vorrichtung (10) erzeugte Rotationskörper sind.

5. Vorrichtung (10) nach einem der vorhergehenden Ansprüche, **dadurch gekennzeichnet, dass** sie eine Vielzahl von austauschbaren Basen (18) aufweist, die jeweils eine andere Höhe haben.

6. Vorrichtung (10) nach einem der vorhergehenden Ansprüche, **dadurch gekennzeichnet, dass** die Form der zweiten Ebene (22a) mit einem oberen Buchsen-Eingriffselement (64a) ausgestattet ist, das so ausgelegt ist, dass es mit einem unteren Stecker-Eingriffselement (58b) zusammenwirkt, das zu einer anderen Form der zweiten Ebene (22b) komplementär ist, um eine Vielzahl von Formen der zweiten Ebene (22a, 22b) axial stapeln zu können.

7. Verfahren zum Formen einer gestuften Speisezubereitung (12), die mittels einer Vorrichtung zum Formen einer gestuften Speisezubereitung (12) nach einem der Ansprüche 1 bis 6 eingesetzt wird, wobei das Verfahren mindestens Folgendes umfasst:
• einen Schritt des Montierens der Form der ersten Ebene (20) auf der Basis (18) in einer Position, in der die Form der ersten Ebene (20) lösbar mit der Basis (18) verbunden ist,
• einen Formschritt, der darin besteht, eine erste Lebensmittelschicht (14) in die Baugruppe zu formen, die durch die Form der ersten Ebene (20) und die Basis (18), die zuvor ineinandergesteckt wurden, gebildet wird,
• einen Schritt des Demontierens der Form der ersten Ebene (20) und der Basis (18), infolge dessen die erste Lebensmittelschicht (14) auf der Basis (18) aufliegt, und
• einen Schritt des Schneidens der ersten Lebensmittelschicht (14) mittels eines scharfen Werkzeugs (72), das auf der freien oberen Endkante (28) der Umfangswand (26) der Basis (18) aufliegt.

8. Verfahren nach Anspruch 7, **dadurch gekennzeichnet, dass** es einen Schritt des Herstellens der gestuften Speisezubereitung (12) aufweist, der infolge des Schneideschritts durchgeführt wird und der mindestens eine erste Phase umfasst, die nacheinander aus Folgendem besteht:
• Montieren der Form der ersten Ebene (20) auf die Basis (18),
• Aufbringen einer ersten Schicht (14) in die Baugruppe, die von der Form der ersten Ebene (20) und der Basis (18) gebildet wird, und
• Abdecken der zuvor aufgebrachten ersten Schicht (14) mit einer zweiten Schicht (16)

9. Verfahren nach Anspruch 8, **dadurch gekennzeichnet, dass** der Schritt des Herstellens der Speisezubereitung (12) mindestens eine zweite Phase umfasst, die nacheinander aus Folgendem besteht:
• Montieren der Form der zweiten Ebene (22a) auf die Form der ersten Ebene (20),
• Aufbringen einer weiteren ersten Schicht (14) in die Form der zweiten Ebene (22a),
• Abdecken der zuvor aufgebrachten ersten Schicht (14) mit einer zweiten Schicht (16).

## Claims

1. Device (10) for moulding a staged culinary preparation (12), comprising at least:
• a base (18) having a cup shape which comprises a bottom (24) adapted to support the culinary preparation (12) and a peripheral wall (26) which extends axially around the central axis (A) of the device (10), from the bottom (24) of the base (18) to a free end upper edge (28),
• a first level mould (20) comprising a barrel (26) which is delimited by an inner face (40) designed to mould the culinary preparation (12) and which extends axially around the central axis (A) from a lower section (36) to an upper section (38), said lower section (36) being designed to be fitted removably inside the peripheral wall (26) of said base (18), and the free end of the upper section (38) of said barrel (26) being equipped with an upper female interlocking member (44) which extends around the central axis (A),
• a second level mould (22a) comprising a barrel (50a) which is delimited by an inner face (56a) designed to mould the culinary preparation (12), which extends axially around the central axis (A) from a lower section (52a) to an upper section (54a), and the free end of the lower section (52a) being equipped with a lower male interlocking member (58a) which is adapted to cooperate with the female interlocking member (44) of the first level mould (20), the second level mould (22a) being designed to be stacked on the first level mould (20) in a nested moulding position in which the male interlocking member (58a) of the second level mould (22a) is received in the complementary female interlocking member (44) of the first level mould (20), so that the barrel (26) of the first level mould (20) extends coaxially with the barrel (50a) of the second level mould (22a), said device (10) being **characterised by** the female interlocking member (44) having the shape of an annular angle iron (45) comprising a seat (46) which extends radially from a free end of the upper section (38) of the associated barrel (26), towards the outside of the associated mould, and a rim (48) which extends axially from a peripheral end of the associated seat (46), and in that the male interlocking member (58a) of the second level mould (22a) has the form of a collar (60a) which extends radially around the central axis (A) from a free end of the lower section (52a) of the associated barrel, up to a peripheral edge (62a), said collar (60a) being adapted to bear axially on said seat (46) of the angle (45) to ensure sealing between the stacked first level mould (20) and the stacked second level mould (22a), and the peripheral edge (62a) of said collar (60a) being adapted to cooperate with said rim (48) of the angle (45) to axially centre the stacked first level mould (20) and the stacked second level mould (22a) along the central axis (A).

2. Device (10) according to claim 1, **characterised in that** the barrel (50a) of the second level mould (22a) has the same diameter as the barrel (26) of the first level mould (20).

3. Device (10) according to any one of the preceding claims, **characterised in that** the female interlocking member (44) extends radially from the barrel (26) of the associated first level mould (20) to form a handle.

4. Device (10) according to any one of the preceding claims, **characterised in that** the base (18), the first level mould (20), and the second level mould (22a) are solids of revolution generated about the central axis (A) of the device (10).

5. Device (10) according to any one of the preceding claims, **characterised in that** it comprises a plurality of interchangeable bases (18) which are each of a different height.

6. Device (10) according to any one of the preceding claims, **characterised in that** the second level mould (22a) is equipped with an upper female interlocking member (64a) which is adapted to cooperate with a complementary lower male interlocking member (58b) of another second level mould (22b), in order to be able to axially stack a plurality of second level moulds (22a, 22b).

7. Method for moulding a staged culinary preparation (12), which is implemented by means of a device for moulding a staged culinary preparation (12) according to any one of claims 1 to 6, the method comprising at least:
• a step of mounting the first level mould (20) on the base (18) in a position in which the first level mould (20) is removably engaged with the base (18),
• a moulding step that consists in moulding a first food layer (14) in the assembly formed by the first level mould (20) and the base (18) that have been previously nested,
• a step of dismantling the first level mould (20) and the base (18), after which the first food layer (14) rests on the base (18), and
• a step of cutting the first food layer (14) by means of a cutting tool (72) which bears on the upper free end edge (28) of the peripheral wall (26) of the base (18).

8. Method according to claim 7, **characterised in that** it comprises a step of manufacturing the staged culinary preparation (12), which is carried out following said cutting step, and which comprises at least a first phase consisting successively of:
• mounting the first level mould (20) on the base (18),
• depositing a first layer (14) in the assembly formed by the first level mould (20) and the base (18), and
• covering the first layer (14) previously deposited with a second layer (16).

9. Method according to claim 8, **characterised in that** the step of manufacturing step the culinary preparation (12) comprises at least one second phase consisting successively of:
• mounting the second level mould (22a) on the first level mould (20),
• depositing another first layer (14) in the second level mould (22a),
• covering said first layer (14) previously deposited with a second layer (16).
